Europäisches Patentamt

European Patent Office

Office européen des brevets

(19)

(11) Veröffentlichungsnummer : **0 084 517**
**B1**

(12) **EUROPÄISCHE PATENTSCHRIFT**

(45) Veröffentlichungstag der Patentschrift :
20.08.86

(21) Anmeldenummer : 83810008.9

(22) Anmeldetag : 10.01.83

(51) Int. Cl.⁴ : **C 23 C 18/14, C 22 B 3/00,
C 22 B 11/04**

(54) Verfahren zum Abscheiden von Metallen auf Halbleiterpulvern.

(30) Priorität : 15.01.82 CH 241/82

(43) Veröffentlichungstag der Anmeldung :
27.07.83 Patentblatt 83/30

(45) Bekanntmachung des Hinweises auf die Patenterteilung : 20.08.86 Patentblatt 86/34

(84) Benannte Vertragsstaaten :
BE CH DE FR GB IT LI

(56) Entgegenhaltungen :
EP-A- 0 018 499
DE-A- 3 139 168
US-A- 3 993 802
IBM TECHNICAL DISCLOSURE BULLETIN, Vol. 23,
No. 3, August 1980 L. KULYNYCH "Laser-enhanced
exchange plating" Seite 1262
JOURNAL OF THE AMERICAN CHEMICAL SOCIETY,
Vol. 100, No. 13, 21. Juni 1978 BERNHARD KRAEU-
TLER "Heterogeneous Photocatalytic Preparation of
Supported Catalysts. Photodeposition of Platinum on
TiO2 Powder and other Substrates" Seiten 4317-4318
THE JOURNAL OF PHYSICAL CHEMISTRY, Vol. 83,
No. 17, 23. August 1979 HARALD REICHE "Heterogeneous Photocatalytic and Photosynthetic Deposition
of Copper on TiO2 and WO3 Powders" Seiten 2248-
2251
THE JOURNAL OF PHYSICAL CHEMISTRY, Vol. 85,
No. 3, 5. Februar 1981 HIROSHI YONEYAMA "Photodeposition of Palladium and Platinum onto Titanium
Dioxide Single Crystals" Seiten 268-272
BULLETIN OF THE CHEMICAL SOCIETY OF JAPAN,
Vol. 51, No. 11, 1978 HIRISHI HADA "The Photoreduction of the Silver Ion in a Zinc Oxide Suspension"
Seiten 3154-3160

(73) Patentinhaber : CIBA-GEIGY AG
Klybeckstrasse 141
CH-4002 Basel (CH)

(72) Erfinder : Meier, Kurt, Dr.
Ulmenstrasse 11
CH-4123 Allschwil (CH)
Erfinder : Bühler, Niklaus, Dr.
Gartenweg 30
CH-4310 Rheinfelden (CH)
Erfinder : Reber, Jean-François, Dr.
Gstaltenrainweg 69
CH-4125 Riehen (CH)

# 0 084 517

**Beschreibung**

Die Erfindung betrifft ein neues Verfahren zum Abscheiden von Metallen auf Halbleiterpulvern.

Aus der Literatur ist bekannt, dass man auf Halbleiterpulvern, wie —ZnO—, $TiO_2$— und $WO_3$-Pulvern, oder $TiO_2$-Einkristallen durch Photoredoxreaktion Metalle abscheiden kann. Als Metallverbindungen wurden einfache Metallsalze, wie z. B. Hexachlorplatinsäure, Silberperchlorat, Kupfersulfat und Palladiumchlorid, eingesetzt. Nach diesen vorbekannten Verfahren muss die Reaktion unter Ausschluss von Sauerstoff durchgeführt werden. Während der Umsetzung allfällig gebildetes $CO_2$ wird zweckmässig durch Einblasen von Stickstoff entfernt [vgl. z. B. JACS, *100* : 13, 4 317 (1978), J. Phys. Chem. *83*, 2 248 (1979), J. Phys. Chem., *85*, 268 (1981) und Bull. Chem. Soc. Japan, *51*, 3 154 (1978)].

Es ist weiter bekannt, dass sich gewisse Halbleiterpulver, wie ZnO, ZnS, $Bi_2S_3$, $FeTiO_3$ oder $Fe_2TiO_4$, beim Belichten in rein wässrigem Medium langsam zersetzen [Solar Energy *20*, 443 (1978)].

Die Erfindung betrifft ein neues Verfahren zum Abscheiden von Gold, Silber und/oder Palladium auf Halbleiterpulvern durch Photoredoxreaktion in Gegenwart von Wasser, Alkanolen mit bis zu 6 C-Atomen, Gemischen aus Wasser und Alkanolen mit bis zu 6 C-Atomen oder anderen organischen Lösungsmitteln, Gemischen aus Wasser und Alkalimetall-, Erdalkalimetall- oder Ammoniumsulfiten oder -sulfiden, oder Acetatpuffer enthaltendem Wasser als oxidierbarem System, dadurch gekennzeichnet, dass man Gold- oder Palladiumsalze oder -komplexe in Gegenwart einer Titandioxid-Halbleiterpulver-Suspension oder Silbersalze oder Silber-Komplexe in Gegenwart einer Titandioxid-, Zinndioxid-, Strontium-titanat-, Niobpentoxid-, Tantalpentoxid, Wolframtrioxid oder Einsentitanat-Halbleiterpulver-Suspension in Gegenwart von Sauerstoff und gegebenenfalls $CO_2$ bestrahlt.

Das erfindungsgemässe Verfahren zeichnet sich einerseits durch seine Einfachheit und Wirtschaftlichkeit aus, da dabei auf besondere Massnahmen und Apparaturen zum Ausschliessen von Sauerstoff und gegebenenfalls von $CO_2$, die sehr aufwendig sein können, verzichtet und in offenen Systemen, z. B. in Klärbecken und dergleichen, gearbeitet werden kann. Das erfindungsgemässe Verfahren gestattet zudem eine sehr weitgehende Extraktion der genannten Metalle selbst aus stark verdünnten Lösungen oder Suspensionen, im allgemeinen bis unterhalb 0,1 ppm und bei Silber sogar bis auf 50 ppb. Es eignet sich auch zur Extraktion von Metallkomplexen, wie $Ag(S_2O_3)_2{}^{3-}$, die nach konventionellen gravimetrischen Methoden nicht ausgefällt werden können. Auch ist es überraschend, dass sich erfindungsgemäss in Gegenwart von Sauerstoff Metalle mit einem negativeren Reduktionspotential als dasjenige von Sauerstoff, wie silber, und Palladium, abscheiden lassen.

Als oxidierbare Systeme werden im erfindungsgemässen Verfahren Wasser, Alkanole mit bis zu 6 C-Atomen, wie Methanol, Aethanol, Propanol, Isopropanol, Butanole und Hexanole, Gemische von Wasser und Alkanolen der genannten Art oder anderen organischen Lösungsmitteln, wie aliphatischen oder cyclischen Aethern, z. B. Diäthyläther, Di-isopropyläther, Tetrahydrofuran, Dioxan oder Cellosolve, Gemische aus Wasser und Alkalimetall-, Erdalkalimetall- oder Ammoniumsulfiten oder -sulfiden, oder Acetatpuffer enthaltendes Wasser verwendet. Geeignete Alkalimetalle und Erdalkalimetalle sind z. B. Na, K, Li, Mg, Ca und Ba. Bevorzugt sind Ammonium- und Alkalimetallsulfite oder -sulfide im Gemisch mit Wasser, besonders Gemische aus Wasser und Natrium- oder Ammoniumsulfit.

Besonders bevorzugt wird das erfindungsgemässe Verfahren in Wasser oder in Acetatpuffer oder Natriumsulfit enthaltendem Wasser durchgeführt. Die Reaktionstemperaturen liegen im allgemeinen zwischen 0 und 40 °C, besonders bevorzugt bei Raumtemperatur.

Bei dem erfindungsgemässen Verfahren werden als Halbleiterpulver $TiO_2$—, $WO_3$—, $SrTiO_3$—, $Ta_2O_5$—, $SnO_2$—, $Nb_2O_5$— oder $FeTiO_3$-Pulver eingesetzt. Ganz besonders bevorzugt ist Titandioxid-Pulver (Anatas-Modifikation).

Die spezifische Oberfläche der Halbleiterpulver kann innerhalb breiter Grenzen variieren und hängt im wesentlichen von der Art des Halbleiters ab. Die im erfindungsgemässen Verfahren einzusetzenden Halbleiterpulver weisen zweckmässig eine spezifische Oberfläche von 0,1 bis 50 $m^2/g$, bevorzugt zwischen 1 und 10 $m^2/g$ auf.

Im allgemeinen können Halbleiterpulver sogenannter technischer Qualität eingesetzt werden. Bei Titandioxidpulvern wird generell die Anatas-Modifikation bevorzugt.

Die Halbleiterpulver können in an sich beliebiger Menge eingesetzt werden. Ein Vorteil des erfindungsgemässen Verfahrens besteht darin, dass im allgemeinen geringe Mengen an Halbleiterpulver für eine erschöpfende Extraktion der Metalle genügen. Zweckmässig werden die Halbleiterpulver in einer Menge von 0,05 bis 5 Gew.%, vorzugsweise 0,1 bis 2,0 Gew.%, bezogen auf das Reaktionsvolumen, verwendet.

Die abzuscheidenden Metalle können als einfache oder komplexe Salze vorliegen, z. B. als Ammonium- und Alkalimetallhexa- oder -tetrahalogenmetallate, Halogenide, Nitrate, Acetate, Cyanide, Sulfate oder Thiosulfate. Geeignete Metallverbindungen bzw. -salze sind beispielsweise Silberacetat, Silbernitrat, Silberthiosulfat, Palladiumchlorid oder -jodid, Palladiumacetat, -cyanid und -nitrat, Lithiumtetrachloropalladat(II), Gold(III) chlorid, -bromid und -jodid. Bevorzugt handelt es sich dabei um Palladium- und insbesondere um Silbersalze bzw. -komplexe.

Als Lichtquelle kann im erfindungsgemässen Verfahren an sich beliebiges Licht eingesetzt werden, dessen Wellenlänge je nach Halbleiter zwischen ca. 200 und 650 nm liegt. Geeignete Lichtquellen sind Sonnenlicht oder gegebenenfalls metallatomdotierte Quecksilberhochdrucklampen, Xenondampflampen, Quecksilber-Xenonlampen, Quecksilberniederdruck- und -mitteldrucklampen, Halogenlampen, Wolframlampen und $D_2$-Lampen.

Bevorzugt erfolgt die Bestrahlung mit Sonnenlicht oder einer Quecksilberhochdrucklampe.

Das erfindungsgemässe Verfahren eignet sich zur Rückgewinnung von Gold, Silber, und Palladium aus den verschiedenartigsten Abwässern und Lösungen, wie sie in der Industrie oder bei chemischen Umsetzungen anfallen, z. B. photographische Entwickler-, Bleich- und Fixierlösungen, Hydrierlösungen und dergl., oder auch zur Metallgewinnung, wie Gold und Silber, aus wässrigen Systemen.

Nach dem erfindungsgemässen Verfahren können bis zu 10 Gew.% Metall auf den Halbleiterpulvern abgeschieden werden. Das abgeschiedene Metall kann leicht von den Halbleiterpulvern getrennt werden, z. B. durch Behandeln mit Oxidationsmitteln, wie $HNO_3$, $H_2SO_4$ und $Na_2O_2$, und die Halbleiterpulver können wieder verwendet werden.

## Beispiel 1

1,0 g Titandioxid (Anatas, spezifische Oberfäche 8 m$^2$/g) wird in einer Lösung von 50 mg Silberacetat in 90 ml destilliertem Wasser und 10 ml Acetatpufferlösung aufgeschlämmt und 2 Stunden unter Rühren in einem offenen Gefäss durch ein Tauchrohr aus Pyrex mit einer 125 W Quecksilberhochdrucklampe bestrahlt. Dabei färbt sich die Suspension dunkelgrau. Die Suspension wird abfiltriert, mit Wasser gewaschen und 24 Std. bei 80 °C/13 000 Pa getrocknet. Man erhält 1,0 g eines dunkelgrauen Pulvers ; Silbergehalt 3,1 Gew.%.

## Beispiel 2

Beispiel 1 wird wiederholt, jedoch unter Verwendung von 190 ml destilliertem Wasser und 50 mg Silberacetat. Die Bestrahlung erfolgt während 2 Stunden mit Sonnenlicht (Strahlungsintensität 500 Watt/m$^2$ bei senkrechtem Lichteinfall, gemessen mit einer YSI-Thermopile). Man erhält 1,0 g eines grauen Pulvers, Silbergehalt 3,0 Gew.%.

## Beispiel 3

Beispiel 1 wird wiederholt, jedoch unter Verwendung von 50 mg Silbernitrat anstelle von 50 mg Silberacetat. Man erhält 1,0 g eines dunkelgrauen Pulvers ; Silbergehalt 3,1 Gew.%.

## Beispiel 4

Beispiel 2 wird wiederholt, jedoch unter Verwendung von 450 ml eines photographsichen Abwassers anstelle der Silberacetat/Acetatpuffer-Lösung. Das photographische Abwasser besteht aus Entwicklerlösung, Bleichbad, Fixierbad und Waschwasser und enthält 10 ppm Ag. Man erhält 1,0 g eines dunkelgrauen Pulvers mit einem Silbergehalt von 0,4 Gew.%. In der Lösung verbleiben 1,6 ppm Ag.

## Beispiel 5

Beispiel 2 wird wiederholt, jedoch unter Verwendung von 1,0 g Zinndioxid anstelle von 1,0 g Titandioxid (spezifische Oberfläche des Zinndioxids 5,96 m$^2$/g). Man erhält ein gräuliches Pulver ; Silbergehalt 2,8 Gew.%.

## Beispiel 6

Beispiel 2 wird wiederholt, jedoch unter Verwendung von 1,0 g Wolframtrioxid (spezifische Öberfläche 3,85 m$^2$/g) anstelle von 1,0 g Titandioxid. Man erhält ein grünlich-graues Pulver ; Silbergehalt 1,3 Gew.%.

## Beispiel 7

Beispiel 2 wird wiederholt, jedoch unter Verwendung von 1,0 g Strontium-titanat (spezifische Oberfläche 3,8 m$^2$/g). Man erhält ein graugelbes Pulver ; Silbergehalt 3,0 Gew.%.

## Beispiel 8

Beispiel 2 wird wiederholt, jedoch unter Verwendung von 1,0 g einer Rutil-Modifikation von Titandioxid (spezifische Oberfläche 0,36 m$^2$/g). Man erhält 1,0 g eines gräulich-weissen Pulvers ; Silbergehalt 3,2 Gew.%.

## Beispiel 9

Beispiel 1 wird wiederholt, jedoch unter Verwendung von 1,0 g Niobpentoxid (spezifische Oberfläche 1,51 m$^2$/g). Man erhält 1 g eines grauen Pulvers ; Silbergehalt 3,3 Gew.%.

## 0 084 517

Beispiel 10

Beispiel 1 wird wiederholt, jedoch unter Verwendung von 1,0 g Tantalpentoxid (spezifische Oberfläche 2,45 m²/g). Man erhält 1,0 g eines grauen Pulvers ; Silbergehalt 2,8 Gew.%.

Beispiel 11

In einem Photoreaktor, der mit einer 125 W Quecksilberhochdrucklampe, einem Magnetrührer und einem wassergekühlten Pyrex-Tauchfinger ausgerüstet ist, wird 1,0 g Titandioxid (Anatas-Modifikation, spezifische Oberfläche 8 m²/g) in einer Lösung von 78 mg Silbernitrat, 500 mg Natriumthiosulfat und 60 mg Natriumsulfit in 100 ml Wasser suspendiert. Die Lösung wird dann bei Raumtemperatur bestrahlt. Zur strahlenchemischen Bestimmung werden jeweils 1 ml-Proben entnommen, das Titandioxid wird abzentrifugiert, und die Lösung wird auf $^{110m}$Ag-Aktivität gemessen.

| Bestrahlungszeit | Umsatzrate/Minute | Bemerkungen |
|---|---|---|
| 0 | 102817 ± 239 | Ausgangslösung |
| 0 | 101453 ± 444 | Ausgangslösung nach 1 Std. im Dunkeln |
| 30 Sekunden | 93035 ± 390 | Aufwärmphase der Lampe |
| 1 Minute | 74458 ± 180 | do. |
| 2 Minuten | 22900 ± 65 | |
| 3 Minuten | 8268 ± 71 | |
| 10 Minuten | 2505 ± 21 | |
| 20 Minuten | 671 ± 4 | |
| 1 Stunde | 305 ± 12 | |
| 2 Stunden | 211 ± 12 | |
| 3 Stunden | 151 ± 8 | |
| 4 Stunden | 118 ± 10 | |
| 5 Stunden | 124 ± 11 | |
| Bindewert | 18 ± 2 | Probe ohne $^{110m}$Ag |

Diese Radioaktivitätsmessungen zeigen, dass der Silbergehalt der Lösung von anfänglich 50 ppm (part per million) nach 10 Minuten auf 1 ppm und nach 4 Stunden auf 50 ppb (parts per billion) sinkt.

Beispiel 12

Beispiel 2 wird wiederholt, jedoch unter Verwendung von 1,0 g Eisentitanat (spezifische Oberfläche 0,45 m²/g). Man erhält ein rotes Pulver mit einem Silbergehalt von 1,2 Gew.%.

Beispiel 13

Beispiel 2 wird wiederholt, jedoch unter Verwendung von 50 mg Lithiumtetrachloropalladat(II). Man erhält ein graues Pulver ; Palladiumgehalt 2,0 Gew.%.

Beispiel 14

Beispiel 2 wird wiederholt, jedoch unter Verwendung von 50 mg Gold(III) chlorid. Man erhält ein blauviolettes Pulver ; Goldgehalt 2,0 Gew.%.

**Patentansprüche**

1. Verfahren zum Abscheiden von Gold, Silber und/oder Palladium auf Halbleiterpulvern durch

4

Photoredoxreaktion in Gegenwart von Wasser, Alkanolen mit bis zu 6 C-Atomen, Gemischen aus Wasser und Alkanolen mit bis zu 6 C-Atomen oder anderen organischen Lösungsmitteln, Gemischen aus Wasser und Alkalimetall-, Erdalkalimatall- oder Ammoniumsulfiten oder -sulfiden, oder Acetatpuffer enthaltendem Wasser als oxidierbarem System, dadurch gekennzeichnet, dass man Gold- oder Palladiumsalze oder -komplexe in Gegenwart einer Titandioxid-Halbleiterpulver-Suspension oder Silbersalze oder Silberkomplexe in Gegenwart einer Titandioxid-, Zinndioxid-, Strontium-titanat-, Niobpentoxid-, Tantalpentoxid, Wolframtrioxid oder Eisentitanat-Halbleiterpulver-Suspension in Gegenwart von Sauerstoff und gegebenenfalls $Co_2$ bestrahlt.

2. Verfahren nach Anspruch 1, dadurch gekennzeichnet, dass man die Reaktion in Wasser oder in Acetatpuffer oder Natriumsulfit enthaltendem Wasser durchführt.

3. Verfahren nach Anspruch 1, dadurch gekennzeichnet, dass man Titandioxidpulver (Anatas-Modifikation) verwendet.

4. Verfahren nach Anspruch 1, dadurch gekennzeichnet, dass man das Halbleiterpulver in einer Menge von 0,05 bis 5 Gew.%, bezogen auf das Reaktionsvolumen, verwendet.

5. Verfajren nach Anspruch 1, dadurch gekennzeichnet, dass die Bestrahlung Sonnenlicht oder mit einer Quecksilberhochdrucklampe erfolgt.

## Claims

1. A process for the deposition of gold, silver and/or palladium on semiconductor powders by means of photoredox reaction in the presence of, as oxidisable system, water, alkanols containing up to 6 carbon atoms, mixtures of water and alkanols containing up to 6 carbon atoms or other organic solvents, mixtures of water and alkali metal sulfites or sulfides, alkaline earth metal sulfites or sulfides or ammonium sulfites or sulfides, or water containing acetate buffer, which process comprises irradiating a gold or palladium salt or complex in the presence of a suspension of titanium dioxide semiconductor powder, or a silver salt or silver complex in the presence of a suspension of titanium dioxide, tin dioxide, strontium titanate, niobium pentoxide, tantalum pentoxide, tungsten trioxide or iron titanate semiconductor powder, said irradiation being carried out in the presence of oxygen and, optionally, $CO_2$.

2. A process according to claim 1, wherein the reaction is carried out in water or in water containing acetate buffer or sodium sulfite.

3. A process according to claim 1, wherein titanium dioxide powder (anatase modification) is used.

4. A process according to claim 1, wherein the semiconductor powder is used in an amount of 0.05 to 5 % by weight, based on the reaction volume.

5. A process according to claim 1, wherein irradiation is carried out with sunlight or with a mercury high pressure lamp.

## Revendications

1. Procédé pour déposer de l'or, de l'argent et/ou du palladium sur des poudres semi-conductrices, par une réaction photochimique d'oxydo-réduction en présence d'eau, d'alcanols ayant jusqu'à 6 atomes de carbone, de mélanges d'eau et d'alcanols ayant jusqu'à 6 atomes de carbone ou d'autres solvants organiques, de mélanges d'eau et de sulfites ou sulfures de métaux alcalins, de métaux alcalino-terreux ou d'ammonium, ou d'eau contenant un tampon acétate, en tant que système oxydable, caractérisé en ce qu'on irradie des sels ou des complexes d'or ou de palladium en présence d'une suspension de dioxyde de titane et de poudre semi-conductrice, ou de sels d'argent ou de complexes d'argent en présence d'une suspension de dioxyde de titane, de dioxyde d'étain, de titanate de strontium, de pentoxyde de niobium, de pentoxyde de tantale, de trioxyde de tungstène ou de titanate de fer et d'une poudre semi-conductrice, en présence d'oxygène et éventuellement de $CO_2$.

2. Procédé selon la revendication 1, caractérisé en ce qu'on réalise la réaction dans l'eau ou dans l'eau contenant un tampon acétate ou de sulfite de sodium.

3. Procédé selon la revendication 1, caractérisé en ce qu'on utilise une poudre de dioxyde de titane (forme anatase).

4. Procédé selon la revendication 1, caractérisé en ce qu'on utilise la poudre semi-conductrice à raison de 0,05 à 5 % en poids sur la base du volume réactionnel.

5. Procédé selon la revendication 1, caractérisé en ce que l'irradiation s'effectue par la lumière du soleil ou à l'aide d'une lampe à vapeur de mercure haute pression.